# FASCICULE DE BREVET EUROPEEN

(11) **EP 2 551 318 B1**
(45) Date de publication et mention de la délivrance du brevet: **26.03.2014**
(21) Numéro de dépôt: 12176985.5
(22) Date de dépôt: 18.07.2012
(51) Int. Cl.: C09J 103/02, C09J 103/08, B32B 7/06, C08K 3/22, C08K 3/26, C08K 3/40, D03D 15/00, E04F 13/00, D06N 7/00

(54) **Composition adhésive pour toile de verre facilitant son arrachage**
Klebezusammensetzung für Glasleinwand zum leichteren Abziehen
Adhesive composition for a glass cloth making same easier to pull

(30) Priorité: 29.07.2011 FR 1156981
(43) Date de publication de la demande: 30.01.2013
(73) Titulaire: BOSTIK SA, 93210 La Plaine-St-Denis (FR)
(72) Inventeur: Nery, Laurent, 93160 NOISY LE GRAND (FR); Mas, Patrick, 94100 SAINT-MAUR-DES-FOSSES (FR)
(74) Mandataire: Salou, Clarisse

(56) Documents cités:
- EP-A1- 1 035 187
- EP-A2- 1 143 064
- WO-A1-2004/003286
- WO-A1-2010/076408
- WO-A2-2010/070248

## Description

L'invention concerne une composition de colle pour toile de verre, une méthode de pose de toile de verre sur un support, comprenant l'utilisation de ladite composition de colle, la toile de verre sur support ainsi obtenue, et une méthode de décollement de la toile de verre sur support, par arrachage de son support.

La toile de verre, qui est l'un des nombreux produits dérivés du verre, fait partie de la famille des revêtements muraux. Les fibres de verre extrêmement fines qui la composent et lui assurent sa solidité sont fabriquées par étirement du verre à haute température. Le tissage des fibres de verre conduit à l'élaboration d'une toile dont la surface est un relief d'aspect caractéristique (losange,...).

La toile de verre trouve sa place partout dans la maison y compris dans la cuisine et dans la salle de bain. C'est un revêtement à peindre et à repeindre à volonté. La toile de verre est commercialisée sous forme de rouleaux, et l'on procède à sa pose par lés, ou bandes, découpés dans ces rouleaux. Une fois collée, la toile de verre a un aspect textural généralement complété par l'application sur sa surface d'une peinture décorative.

La toile de verre est aujourd'hui l'un des produits les plus utilisés pour revêtir et décorer un mur ou un plafond en mauvais état. En effet, elle dissimule avantageusement les irrégularités de surface des murs et plafonds dégradés. Son utilisation permet d'éviter des travaux de maçonnerie relativement importants tels que le rebouchage des trous et fissures et/ou la réfection par un enduit au plâtre. En outre, la toile de verre est facile à poser sur pratiquement tous les types de supports de maçonnerie, car sa structure s'adapte particulièrement bien aux supports qu'ils soient d'aspect régulier ou irrégulier.

Souvent employée dans le domaine de la rénovation en vertu de ses performances, la toile de verre s'emploie aussi pour revêtir des murs et/ou des plafonds neufs. En effet, la toile de verre posée sur un support résiste assez bien aux contraintes et au travail des surfaces de ce support au fil du temps. Son utilisation sur un support est un bon moyen pour prévenir et limiter l'apparition de fissures et/ou micro fissures sur ce support, tout en bénéficiant d'un revêtement décoratif attrayant.

Dans tous les cas, une toile de verre est non seulement solide et résistante aux chocs, mais aussi de bonne tenue dans le temps. En effet, elle est étanche et imputrescible. Son entretien est relativement facile, par de l'eau claire ou légèrement savonneuse.

Le seul inconvénient connu de la toile de verre est la difficulté à l'enlever de son support. En effet, le décollement de la toile de verre par arrachage est très difficile à réaliser. Dans la majeure partie des cas, il faut recouvrir la toile de verre d'un enduit pour masquer les reliefs avant de la recouvrir de papier-peint ou de peinture. Néanmoins, cela ne peut être effectué indéfiniment.

Des versions pré-enduites « *strippables* » (i.e. arrachables à sec) de toiles de verre, ont été envisagées pour faciliter son décollage à sec, comme décrit par exemple dans la demande de brevet US 2003/0198804 A1. Cette demande de brevet décrit une toile de verre ayant reçu sur l'une de ses faces une couche de type adhésif sensible à la pression (ou PSA pour *« Pressure-sensitive adhesive »* en anglais), et qui fond à chaud. Cette couche est protégée par un film protecteur, que l'on détache au moment de la pose. Cette toile de verre est facilement installée sur un mur et peut être peinte immédiatement après sa pose. Son arrachage ultérieur est facilité, car la couche adhésive a une plus grande affinité pour la toile de verre que pour le mur.

Cependant, cette version pré-enduite pose problème car le film protecteur enlevé au moment de la pose est générateur d'une quantité important de déchets. En outre, ce film protecteur est généralement de type siliconé et donc de coût relativement élevé. Par suite, les solutions de revêtement mural autoadhésif facilement détachable du mur ou repositionnable, comportant une couche supplémentaire, n'ont pas connu de réel succès commercial.

Ainsi, à ce jour, il n'existe pas de composition de colle pour toile de verre simple à manipuler, d'un coût raisonnable, et permettant de maintenir au mur la toile de verre pendant sa durée de vie, tout en facilitant son arrachage en fin de vie du produit.

La présente invention a pour objet de proposer une nouvelle composition de colle pour toile de verre résolvant les problèmes de l'art antérieur.

L'invention a pour objet une composition de colle pour toile de verre, de viscosité comprise dans une fourchette de 15 à 120 Pa.s à 23°C et de seuil d'écoulement d'au moins 400 Pa à 23°C, ladite composition étant une dispersion aqueuse contenant :
- Au moins une charge minérale formée de particules de granulométrie comprise dans une fourchette de 0,1 à 130 µm, d'indice de polydispersité compris dans une fourchette de 1,1 à 20, et de taille médiane D₅₀ comprise dans une fourchette de 0,5 à 40 µm, la charge minérale présentant un produit de solubilité dans l'eau, Kₛ, inférieur ou égal à 10⁻⁶ à 25°C, la charge minérale étant présente dans la composition en quantité comprise dans une fourchette de 12 à 55%, en poids par rapport au poids total de la composition;
- Au moins un amidon, l'amidon étant présent dans la composition en quantité comprise dans une fourchette de 5 à 15%, en poids par rapport au poids total de la composition ; et
- Au moins un polymère en quantité, exprimée en sec, comprise dans une fourchette de 0,5 à 6%, en poids par rapport au poids total de la composition.

La composition selon l'invention se présente généralement sous la forme d'une crème onctueuse. Appliquée à l'aide d'un rouleau, à raison de 150 à 250 g/m², elle permet généralement une adhésion immédiate de la toile de verre sur un support, par exemple un support mural. Cette toile de verre résiste avantageusement au détrempage causé par l'application, sur sa surface de couche(s) de peinture, usuellement de deux couches de peinture. En outre, cette composition permet avantageusement l'arrachage ultérieur de la toile de verre, usuellement lé par lé et d'un seul tenant, de façon aisée et propre sans que la toile de verre ne se délite et sans détérioration du support. Il ne reste alors plus à l'utilisateur qu'à poncer légèrement les résidus éventuels de colle sèche demeurant sur le support après cet arrachage, pour restituer le support tel qu'à l'origine (i.e. avant le dépôt de la toile de verre).

La composition selon l'invention permet de poser (i.e. de fixer, généralement par collage), puis de déposer (i.e. de retirer, généralement par arrachage) n'importe quelle toile de verre du marché, collée sur tout type de support tel que plaque de plâtre cartonnée, béton, plâtre...

Il n'est pas utile selon l'invention d'employer une toile de verre pré-enduite ou d'employer une toile de verre enduite d'un adhésif sensible à la pression, pour que l'arrachage (ou dépose) fonctionne.

Selon un mode de réalisation, la charge minérale est comprise dans le groupe formé par les carbonates de calcium, les dioxydes de titane et les poudres de verre.

De préférence, le polymère est un polyacrylate ou un polyacétate de vinyle, et de façon encore plus préférée le polymère est un polyacétate de vinyle.

La composition selon l'invention peut comporter en outre au moins un additif choisi dans le groupe formé par les plastifiants, les conservateurs, les agents anti-mousse, les agents mouillants et les agents dispersants de charge minérale. En général, la quantité d'additif(s) ne dépasse pas 2%, en poids par rapport au poids total de la composition.

La charge minérale selon l'invention est une poudre, c'est-à-dire une matière solide fractionnée en petits morceaux, ou grains, chacun de ces grains étant en général de taille inférieure à 150 µm.

On caractérise une poudre par sa granulométrie, c'est-à-dire la répartition statistique de la taille des grains. On trace une courbe représentant le nombre de grains ayant un diamètre donné, ou encore le volume représentant les grains ayant un diamètre donné (en supposant des grains sphériques).

De préférence, la quantité de charge minérale dans ladite composition est comprise dans une fourchette de 15 à 50%, de façon préférée de 20 à 50%, en poids par rapport au poids total de la composition.

La charge minérale selon l'invention présente un produit de solubilité dans l'eau, mesurée par la valeur Kₛ à 25°C, inférieur ou égal à 10⁻⁶, voir infiniment petit. La charge minérale selon l'invention comprend donc les charges insolubles dans l'eau, telles que les poudres de dioxyde de titane TiO₂ et les poudres de verre.

Le produit de solubilité, qui est sans dimension, est défini de la façon suivante : soit la réaction de dissolution suivante dans l'eau :

**M_{q}Xₙ₍ₛ₎ ⇆qMⁿ⁺ + ₙX^{q-}**

où Mⁿ⁺ est un ion chargé positivement et X^{q-} est un ion chargé négativement.

Le produit de solubilité Kₛ de ce composé M_{q}Xₙ correspond à la constante d'équilibre de la réaction de dissolution de ce solide, soit K_{S} = [X^{q-}]ⁿ [Mⁿ⁺]^{q} .

En outre, pKₛ = -log₁₀Kₛ.

Les valeurs suivantes des K_{S} sont données par la littérature (ouvrages de référence ou *Handbook*).

Le produit de solubilité (K_{S}) du carbonate de calcium CaCO₃ à 25°C est égal à 5.10⁻⁹, soit un pKₛ de 8,3. Le carbonate de calcium est une charge minérale selon l'invention.

Le produit de solubilité (K_{S}) du sulfate de calcium CaSO₄ à 25°C est égal à 2,4.10⁻⁵, soit un pKₛ de 4,2. Le sulfate de calcium n'est pas une charge minérale selon l'invention.

Le produit de solubilité (K_{S}) de la silice amorphe SiO₂ à 25°C est égal à 2,04.10⁻³, soit un pK_{S} de 2,69. La silice (amorphe) n'est pas une charge minérale selon l'invention.

Comme il sera démontré dans les exemples ci-après, il est important que la charge minérale selon l'invention soit une poudre formée de particules de granulométrie comprise dans une fourchette de 0,1 à 130 µm, c'est-à-dire que la majeure partie des particules a une dimension comprise dans cette fourchette. Ainsi, si D(v.0.1) est la taille de particule pour laquelle 10% de la poudre se trouve au-dessous de ces dimensions, et si D(v.0.9) est la taille de particule pour laquelle 90% de la poudre se trouve au- dessous de ces dimensions, cela revient à indiquer que le D(v.0.1) de la poudre doit être supérieur ou égal à 0,1 µm et que le D(v.0.9) doit être inférieur ou égal à 130 µm.

On parle ici de dimension de particules même si les particules considérées, telles les particules de CaCO₃, ne sont pas sphériques. Ce que l'on appelle dimension (ou taille) d'une particule (ou grain) est en fait son « diamètre équivalent », c'est-à-dire le diamètre de la sphère qui se comporterait de manière identique lors de l'opération d'analyse granulométrique choisie. Selon l'invention, la méthode de mesure de granulométrie pour mesurer la distribution de tailles de la poudre est la granulométrie laser. Les mesures réalisées dans les exemples ci-après l'ont été à l'aide d'un granulomètre laser de marque Malvern de la société Malvern Instruments Ltd.

D'autre part, il est aussi important que l'indice de polydispersité de la poudre soit compris dans une fourchette de 1,1 à 20. Si D[4,3] est le diamètre moyen en volume de la poudre, et D[3,2] est le diamètre moyen pondéré en surface de la poudre, alors cela revient à indiquer que le rapport D[4,3] / D[3,2] (i.e. l'indice de polydispersité) doit être compris dans une fourchette de 1,1 à 20.

Enfin, il est aussi important selon l'invention que la taille médiane D₅₀ des particules soit comprise dans une fourchette de 0,5 à 40 µm. Si D(v.0.5) est la taille de particule pour laquelle 50% de la poudre a une taille inférieure et 50% une taille supérieure à cette taille, cela revient à indiquer que le D(v.0.5) doit être compris dans une fourchette de 0,5 à 40 µm.

Le polymère présent dans la composition selon l'invention a généralement une fonction de liant. De préférence, le polymère est généralement présent dans la composition en quantité, exprimée en sec, comprise dans une fourchette de 0,5 à 4%, de préférence de 1 à 3%, en poids par rapport au poids total de la composition.

De préférence, la quantité d'amidon dans la composition selon l'invention est comprise dans une fourchette de 5 à 12%, de façon préférée de 5 à 10%, en poids par rapport au poids total de la composition.

Selon un mode de réalisation préféré, l'amidon comprend un amidon de blé natif et un amidon réticulé de maïs ou de pomme de terre, de préférence du carboxyméthyl ether d'amidon réticulé de pomme de terre ou de maïs, l'amidon réticulé étant présent dans une quantité de 0 à 20%, de préférence de 5 à 18%, de façon encore plus préférée de 9 à 15% en poids, par rapport au poids total d'amidon présent dans la composition de colle.

L'invention concerne aussi un procédé de fabrication de la composition de colle selon l'invention, telle qu'explicité ci-après.

L'amidon présent dans la composition de colle selon l'invention comprend généralement un amidon natif. Dans ce cas, pour utiliser cet amidon natif dans la composition de colle, il doit avoir été activé lors de la fabrication de la colle, c'est-à-dire avoir été suffisamment chauffé pour développer une viscosité adéquate.

Ainsi, lorsque l'amidon comporte de l'amidon natif, le procédé de fabrication de la composition de colle selon l'invention, comporte le mélange sous agitation de la charge, de l'eau, de l'amidon, y compris l'amidon natif, éventuellement de(s) conservateur(s)/additif(s) (par exemple de l'anti-mousse et/ou du dispersant de charge) dans un récipient adapté, puis le chauffage de ce mélange, généralement par injection de vapeur d'eau, usuellement à une température d'environ 85°C, le plus souvent sous agitation, généralement à petite vitesse. Dans un tel cas, la durée de ce chauffage est le plus souvent d'environ une vingtaine de minutes. Ensuite, la température baisse grâce à un refroidissement, par exemple effectué par double enveloppe. Lorsque la température descend à moins de 70-72°C, on peut ajouter l'agent dispersant de charge, éventuellement de(s) conservateur(s)/additif(s), éventuellement de l'amidon réticulé, et on mélange sous agitation à grande vitesse, généralement pendant environ une soixantaine de minutes. Puis la température baisse grâce au refroidissement par double enveloppe. Lorsque la température descend à moins de 60°C, on peut ajouter le polymère, généralement en dispersion aqueuse, et d'autre(s) conservateur(s)/additif(s). Bien entendu, ce procédé de fabrication peut être soumis à des variantes accessibles à l'homme du métier. Par exemple l'eau peut être ajoutée en trois fois, aux trois étapes, et la charge peut être ajoutée en deux fois, aux première et deuxième étapes.

A l'inverse, lorsque l'amidon ne comporte pas d'amidon natif, le procédé de fabrication de la composition de colle selon l'invention, comporte le mélange sous agitation des différents composants de la colle, à température ambiante (environ 23°C).

Dans les deux cas, la composition de colle selon l'invention doit présenter une viscosité mesurée par appareil Brookfield RVT, avec un Mobile 7 et à une vitesse 20 tr/min, comprise dans une fourchette de 30 à 120 Pa.s à 23°C. En outre, son seuil d'écoulement est d'au moins 400 Pa à 23°C. La mesure du seuil d'écoulement est réalisée à l'aide d'un rhéomètre cône-plateau en faisant varier la contrainte de 50 à 2000 Pa.

L'invention concerne aussi un procédé de pose d'une toile de verre par application d'au moins une couche d'une composition de colle selon l'invention, dans une quantité de 150 à 250 g/m², sur un support puis application de la toile de verre sur le support ainsi enduit.

Un tel procédé de pose est facilement réalisable.

L'invention concerne aussi la toile de verre sur un support obtenue selon le procédé de pose selon l'invention.

L'invention concerne enfin un procédé de dépose d'une toile de verre enduite sur un support selon l'invention, ledit procédé comprenant l'arrachage manuel, à sec, de ladite toile de verre.

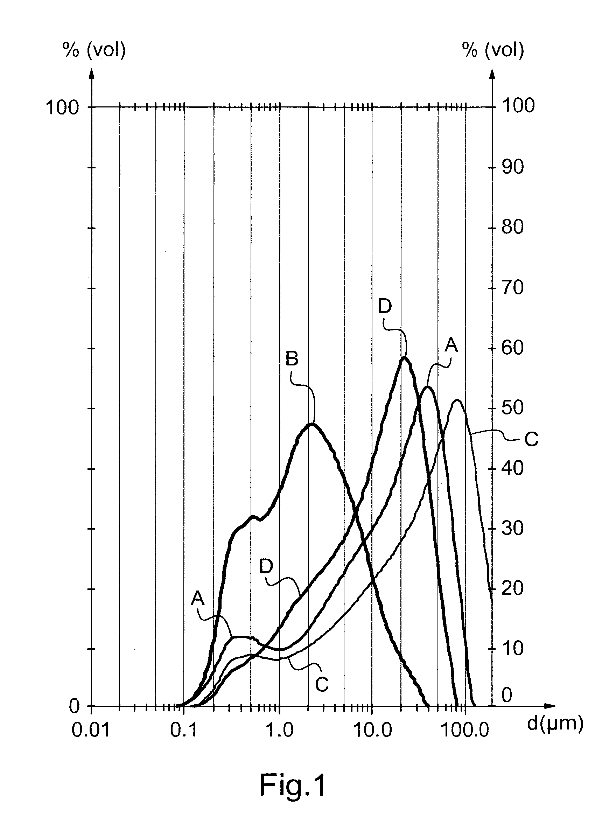

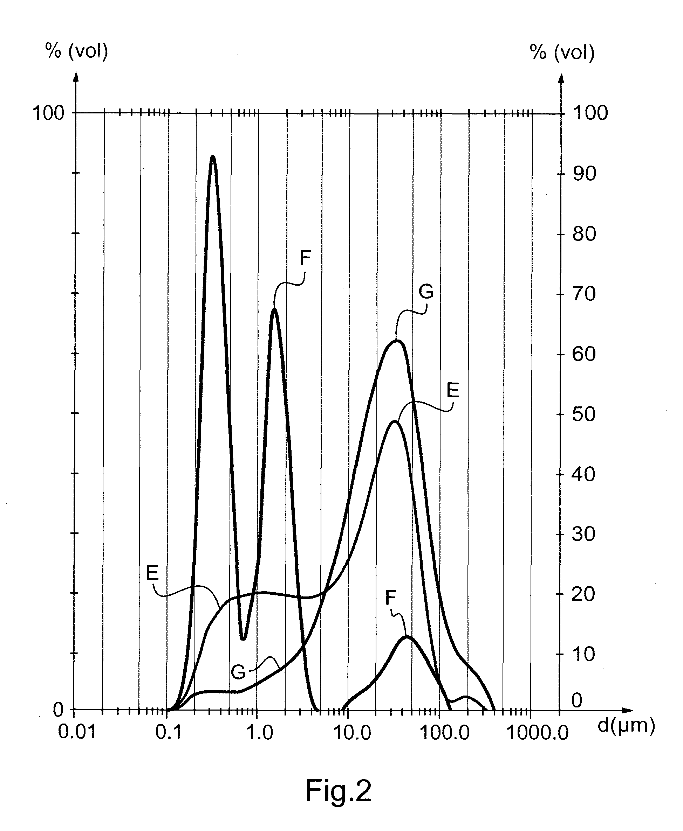

L'invention est illustrée par les Figures 1 et 2 ci-jointes.
La Figure 1 représente des courbes de répartitions granulométriques des charges A, B, C et D, c'est-à-dire que chaque courbe représente le pourcentage en volume des particules de la charge concernée en fonction du diamètre des particules d (en µm).
La Figure 2 représente des courbes de répartitions granulométriques des charges E, F et G, c'est-à-dire que chaque courbe représente le pourcentage en volume des particules de la charge concernée en fonction du diamètre des particules d (en µm).
Les Figures 1 et 2 sont commentées dans les exemples ci-après.

L'invention sera mieux comprise à la lumière des exemples suivants qui illustrent l'invention à titre non limitatif.

### Exemples

Tous les exemples ont été réalisés selon le protocole suivant :
Une plaque de plâtre cartonnée de type Placoplâtre® BA13 de la société Saint Gobain, de largeur 1,2 m et de hauteur 2,50 m était fournie, en tant que support.

Un lé de toile de verre, de grammage 180 g/m², était posé sur ce support disposé verticalement, grâce à la composition de colle à tester, de la façon suivante : la composition était appliquée sur le support puis le lé de toile de verre était affiché (c'est-à-dire mis en contact sur le support encollé). Un marouflage était ensuite effectué pour assurer une bonne adhésion de la toile de verre sur le support. On mesurait la facilité d'application de la composition, ainsi que le grammage de la composition de colle appliquée sur le support. Le grammage de la composition de colle était dans tous les cas de 200 ± 20 g/m².

Une journée (environ 24 heures) de séchage était respectée, à la suite de laquelle deux couches de peinture acrylique aqueuse (produit commercial Satinéa de la société Guittet) étaient appliquées sur la toile de verre ainsi séchée, à trois heures d'intervalle.

Après une durée de sept jours à compter du collage, on essayait de décoller la toile de verre à la main, et à sec. Pour cela, un outil telle qu'une spatule était utilisée dans un coin du lé pour initier l'arrachage. La partie décollée avec cet outil était ensuite saisie à la main, et tirée pour arrachage du lé de toile de verre. On mesurait alors deux effets : la détérioration du support et la possibilité d'enlever les résidus de colle, restés sur le support, par ponçage (ce qui est souhaité, pour restituer le support d'origine).

### 1. Charges

Toutes les charges utilisées dans les exemples sont décrites ci-après.

### Nature des charges

Chacune des charges a été dénommée par une lettre, à savoir :
**A** pour du carbonate de calcium CaCO₃, produit commercial Béatite 12 de la société OMG (de produit de solubilité Kₛ à 25°C égal à 5.10⁻⁹),
**B** pour du carbonate de calcium CaCO₃ produit commercial Micronic P de la société Imérys (de même valeur de produit de solubilité),
**C** pour du carbonate de calcium CaCO₃, produit commercial Béatite 30 de la société OMG (de même valeur de produit de solubilité),
**D** pour de la silice SiO₂, produit commercial S400 de la société Fulchiron (de produit de solubilité K_{S} à 25°C égal à 6,8.10⁻²),
**E** pour du sulfate de calcium CaSO₄, produit commercial Sulykal DH Bleu de la société Saint-Gobain Formula (de produit de solubilité K_{S} à 25°C égal à 2,4.10⁻⁵),
**F** pour du dioxyde de titane TiO₂, produit commercial Titane Kronos 2056 de la société Kronos (non soluble selon les manuels de référence), et
**G** pour de la poudre de verre, produit commercial GF1 de la société Potters (non soluble selon les manuels de référence).

### Répartitions granulométriques des charges

Les figures 1 et 2 ci-jointes représentent chacune des courbes de répartitions granulométriques des charges A à G, c'est-à-dire que chaque courbe représente le pourcentage en volume des particules de la charge concernée en fonction du diamètre des particules d (en µm). On peut voir sur la figure 1 les répartitions granulométriques des charges A, B, C et D et sur la figure 2 les répartitions granulométriques des charges E, F et G. Les tableaux respectifs 1 et 2 ci-après résument les principales caractéristiques granulométriques des charges des figures respectives 1 et 2.

Les mesures de granulométries ont toutes été effectuées en voie humide, par granulomètre laser Malvern Maztersizer S long bed Ver. 2.18 FR de Malvern Instruments Ltd de caractéristiques suivantes :
Gamme 300RF mm ;
Présentation : 3OHD
Modèle d'analyse : polydisperse
Modifications : aucune
Longueur Faisceau : 2,40 mm
Particules R.I = (1,5295 ; 0,1000) ; et
Dispersant R.I. = 1,3300.

La valeur de chacune de ces mesures est une moyenne de trois mesures reproductibles.

**Tableau 1**

| Charges | Charge **A** selon l'invention (CaCO₃) | Charge **B** selon l'invention (CaCO₃) | Charge **C** selon l'invention (CaCO₃) | Charge **D** comparative (Silice) |
|---|---|---|---|---|
| D₅₀ = D(v.0.5) | 15,75 µm | 1,92 µm | 32,58 µm | 11,36 µm |
| D(v.0.1) | 0,69 µm | 0,36 µm | 1,15 µm | 1,16 µm |
| D(v.0.9) | 57,07 µm | 9,17 µm | 128,63 µm | 36,42 µm |
| D[4,3] | 23,18 µm | 3,87 µm | 50,58 µm | 15,56 µm |
| D[3,2] | 2,15 µm | 0,96 µm | 2,95 µm | 2,92 µm |
| D[4,3]/D[3,2] | 10,78 | 4,03 | 17,15 | 5,33 |

Dans lequel, comme indiqué précédemment :
**D(v.0.5)** est la taille de particule pour laquelle 50% de la charge a une taille inférieure et 50% une taille supérieure à cette taille ;
**D(v.0.1)** est la taille de particule pour laquelle 10% de la charge se trouve au-dessous de ces dimensions ;
**D(v.0.9)** est la taille de particule pour laquelle 90% de la charge se trouve au-dessous de ces dimensions ;
**D[4,3]** est le diamètre moyen en volume de la poudre qu'est la charge; et
**D[3,2]** est le diamètre moyen pondéré en surface de la poudre qu'est la charge.

**Tableau 2**

| Charges | Charge **E** comparative (CaSO₄) | Charge **F** selon l'invention (TiO₂) | Charge **G** selon l'invention (Poudre de Verre) |
|---|---|---|---|
| D₅₀ = D(v.0.5) | 11,83 µm | 0,75 µm | 27,21 µm |
| D(v.0.1) | 0,57 µm | 0,27 µm | 4,79 µm |
| D(v.0.9) | 53,24 µm | 21,90 µm | 87,45 µm |
| D[4,3] | 21,91 µm | 6,67 µm | 40,93 µm |
| D[3,2] | 1,88 µm | 0,58 µm | 6,94 µm |
| D[4.3]/D[3,2] | 11,65 | 11,50 | 5,90 |

### 2. Compositions de colle, et leur utilisation en pose et dépose de toile de verre

Toutes les compositions de colle testées, ainsi que leur conformité ou non avec l'invention, sont résumées dans le tableau 10 présenté en fin des exemples. Toutes les compositions ont été fabriquées comme explicité précédemment, par mélange et agitation des constituants pendant une certaine durée, et chauffage lorsque le mélange comportait de l'amidon natif.

### 2.1 Etude de l'influence de la présence de charge

Une composition de colle A_{sc} testée, sans présence de charge, est une composition standard et commerciale de colle pour toile de verre, vendue prête à l'emploi.

C'était une dispersion aqueuse contenant 83,69 % poids d'eau, 11,12 % poids d'amidon de blé natif (Produit commercial amidon de blé Chamtor de la société Chamtor) et 1,69 % poids de carboxyméthyl éther d'amidon de pomme de terre réticulé (sous la dénomination Emcol UK-N de la société Emsland, produit de CAS 68412-91-9), ainsi que 1,595 % poids (polymère à 55% d'extrait sec, dispersé dans de l'eau, cette dispersion de viscosité de 36 à 52 Pa.s étant ajoutée à teneur de 2,90 % poids dans la composition) de polyacétate de vinyle.

Cette composition de colle comprenait en outre 0,58% en poids de conservateurs / additifs, ainsi que 0,03% d'additif antimousse (produit commercial Foamaster NXZ de la société Cognis).

Le test, pour cette composition, a donné les résultats suivants, résumés dans le Tableau 3, en termes de viscosité, de facilité d'application, d'adhésion sur le support, de démontabilité (i.e. facilité d'arrachage à la main et à sec), de détérioration du support et de possibilité de ponçage.

**Tableau 3**

| | Composition de colle A_{sc} |
|---|---|
| Viscosité (Brookfield RVT, Mobile 7, 20 tr/min) (Pa.s) à 23°C | 50 |
| Facilité d'application | OK |
| Adhésion sur support | OK |
| Démontabilité | Difficile |
| Détérioration du support | Oui |
| Ponçage | Non |

Par conséquent, cette composition, sans charge, n'était pas acceptable selon l'invention.

### 2.2 Etude de l'influence de la nature de la charge

Chaque composition de colle testée dans le présent exemple a reçu la dénomination correspondante de la charge présente dans la composition de colle, avec l'indice « n ».

Une série de tests a été réalisée pour différentes colles, chaque composition de colle étant une dispersion aqueuse contenant 28,5 % poids de charge, 55,48 % poids d'eau, 7,37 % poids d'amidon de blé natif (le même que dans l'exemple 2.1, amidon blé Chamtor) et 1,12 % poids de carboxyméthyl éther d'amidon de pomme de terre réticulé (le même que dans l'exemple 2.1, Emcol UK-N), ainsi que 1,056% poids sec (correspondant à 1,92 % poids en dispersion aqueuse) du polyacétate de vinyle (le même que dans l'exemple 2.1).

Chaque composition de colle comprenait en outre 5% en poids en glycérine au titre de plastifiant, 0,39% en poids de conservateurs / additifs, ainsi que 0,02% d'additif antimousse (le même que dans l'exemple 2.1, Foamaster NXZ) et 0,20% d'agent dispersant de charge Ecodis P90 (produit commercial de la société Omya) (solution aqueuse à 40% de polycarboxylate de sodium de Mₙ 2000 g/mol et de M_{w} 4500 g/mol).

Les tests, pour les compositions de nature différente Aₙ, Dₙ, En, Fₙ et Gₙ, ont donné les résultats suivants, résumés dans le Tableau 4, en termes de viscosité, de facilité d'application, d'adhésion sur le support, de démontabilité, de détérioration du support et de ponçage.

**Tableau 4**

| Composition de colle | Aₙ (selon l'invention) | Dₙ (comparatif) | Eₙ (comparatif) | Fₙ (selon l'invention) | Gₙ (selon l'invention) |
|---|---|---|---|---|---|
| Viscosité (Pa.s) * | ND | ND | 74 | 104 | 80 |
| Facilité d'application | OK | OK | OK | OK | OK |
| Adhésion sur support | OK | OK | OK | OK | OK |
| Démontabilité | Facile | Moyenne | Difficile | Facile | Facile |
| Détérioration du support | Non | Oui | Non | Non | Non |
| Ponçage | Oui | Oui | Oui | Oui | Oui |

| | | | | | |
|---|---|---|---|---|---|
| Où ND : non déterminé et * : par Brookfield RVT, Mobile 7, vitesse 20 tr/min, à 23°C | | | | | |

Par conséquent, les compositions Aₙ, Fₙ et Gₙ selon l'invention étaient acceptables, donnant d'excellents résultats tant pour la démontabilité, toujours aisée, que pour l'absence de détérioration du support à l'arrachage.

A l'inverse, les compositions comparatives Dₙ et En n'étaient pas acceptables car elles ne permettaient par une démontabilité facile voire elles conduisaient à une détérioration du support à l'arrachage.

### 2.3 Etude de l'influence de la granulométrie de la charge

Chaque composition de colle testée dans le présent exemple a reçu la dénomination correspondante de la charge présente dans la composition de colle, avec l'indice « n ». La composition An, et les résultats de son test, ont été repris de l'exemple précédent.

Chaque composition de colle Bₙ et Cₙ était une dispersion aqueuse contenant 28,5 % poids de charge, 55,48 % poids d'eau, 7,37 % poids d'amidon de blé natif (le même que dans l'exemple 2.1, amidon de blé Chamtor) et 1,12 % poids de carboxyméthyl éther d'amidon de pomme de terre réticulé (le même que dans l'exemple 2.1, Emcol UK-N), ainsi que 1,92 % poids de polyacétate de vinyle (le même que dans l'exemple 2.1) en dispersion aqueuse (1,056% de polymère sec).

Chaque composition de colle Bₙ et Cₙ comprenait en outre 5% en poids en glycérine au titre de plastifiant, 0,39% en poids de conservateurs / additifs (les mêmes que dans l'exemple 2.2), ainsi que 0,02% d'additif antimousse (le même que dans l'exemple 2.2, Foamaster NXZ) et 0,20% d'agent dispersant de charge (le même que dans l'exemple 2.2, Ecodis P90).

Les tests, pour les compositions différentes Aₙ, Bₙ, et Cₙ, ont donné les résultats suivants, résumés dans le Tableau 5, en termes de facilité d'application, d'adhésion sur le support, de démontabilité, de détérioration du support et de ponçage.

**Tableau 5**

| Composition de colle | Aₙ (selon l'invention) | Bₙ (selon l'invention) | Cₙ (selon l'invention) |
|---|---|---|---|
| Facilité d'application | OK | OK | OK |
| Adhésion sur support | OK | OK | OK |
| Démontabilité | Facile | Facile | Facile |
| Détérioration du support | Non | Non | Non |
| Ponçage | Oui | Oui | Oui |

Par conséquent, les compositions Bₙ et Cₙ selon l'invention étaient aussi acceptables que la composition Aₙ, donnant d'excellents résultats tant pour la démontabilité, toujours aisée, que pour l'absence de détérioration du support à l'arrachage.

### 2.4 Etude de l'influence de la quantité de la charge et de la viscosité

Chaque composition de colle testée comportait de la charge A, en quantité respectivement de 10%, 20%, 30%, 40%, 50% et 60%. Elles étaient dénommées respectivement A₁₀, A₂₀, A₃₀, A₄₀, A₅₀ et A₆₀. Une autre composition de colle testée, A_{AM}, comportait de la charge A et de l'amidon Emcol UK-N (le même que dans l'exemple 2.1), très visqueux dans l'eau.

La composition de colle A₁₀ était une dispersion aqueuse contenant 10,00 % poids de charge A, 74,48 % poids d'eau, 9,90 % poids d'amidon de blé natif (le même que dans l'exemple 2.1, amidon de blé Chamtor) et 1,51 % poids de carboxyméthyl éther d'amidon de pomme de terre réticulé (le même que dans l'exemple 2.1, Emcol UK-N), ainsi que 2,58 % poids de polyacétate de vinyle (le même que dans l'exemple 2.1) en dispersion aqueuse soit 1,419% poids à sec. Cette composition A₁₀ comprenait en outre 0,50% en poids de conservateurs / additifs (les mêmes que dans l'exemple 2.2), ainsi que 0,03% d'additif antimousse (le même que dans l'exemple 2.2, Foamaster NXZ) et 1,00% d'agent dispersant de charge (le même que dans l'exemple 2.2, Ecodis P90).

Le test, pour cette composition A₁₀, a donné les résultats suivants, résumés dans le Tableau 6, en termes de facilité d'application, d'adhésion sur le support, de démontabilité, de détérioration du support et de ponçage.

**Tableau 6**

| Composition de colle | A₁₀ |
|---|---|
| Facilité d'application | OK |
| Adhésion sur support | OK |
| Démontabilité | Moyenne |
| Détérioration du support | Oui |
| Ponçage | Non |

Par suite, cette composition A₁₀ n'était pas acceptable selon l'invention.

La composition de colle A₂₀ était une dispersion aqueuse contenant 20 % poids de charge A, 64,75 % poids d'eau, 9,05 % poids d'amidon de blé natif (le même que dans l'exemple 2.1, amidon de blé Chamtor) et 0,96 % poids de carboxyméthyl éther d'amidon de pomme de terre réticulé (le même que dans l'exemple 2.1, Emcol UK-N), ainsi que 4,35 % poids de polyacétate de vinyle (le même que dans l'exemple 2.1) en dispersion aqueuse soit 2,3925% poids à sec. Cette composition A₂₀ comprenait en outre 0,66% en poids de conservateurs / additifs (les mêmes que dans l'exemple 2.2), ainsi que 0,03% d'additif antimousse (le même que dans l'exemple 2.2, Foamaster NXZ) et 0,20% d'agent dispersant de charge (le même que dans l'exemple 2.2, Ecodis P90).

La composition de colle A₃₀ était une dispersion aqueuse contenant 30,00 % poids de charge A, 57,74 % poids d'eau, 7,67 % poids d'amidon de blé natif (le même que dans l'exemple 2.1, amidon de blé Chamtor) et 1,17 % poids de carboxyméthyl éther d'amidon de pomme de terre réticulé (le même que dans l'exemple 2.1, Emcol UK-N), ainsi que 2,00 % poids de polyacétate de vinyle (le même que dans l'exemple 2.1) en dispersion aqueuse soit 1,1% poids à sec. Cette composition A₃₀ comprenait en outre 0,40% en poids de conservateurs / additifs (les mêmes que dans l'exemple 2.2), ainsi que 0,02% d'additif antimousse (le même que dans l'exemple 2.2, Foamaster NXZ) et 1,00% d'agent dispersant de charge (le même que dans l'exemple 2.2, Ecodis P90).

La composition de colle A₄₀ était une dispersion aqueuse contenant 40,00 % poids de charge A, 49,38 % poids d'eau, 6,56 % poids d'amidon de blé natif(le même que dans l'exemple 2.1, amidon de blé Chamtor) et 1,00 % poids de carboxyméthyl éther d'amidon de pomme de terre réticulé (le même que dans l'exemple 2.1, Emcol UK-N), ainsi que 1,71 % poids de polyacétate de vinyle (le même que dans l'exemple 2.1) en dispersion aqueuse soit 0,9405% poids à sec. Cette composition A₄₀ comprenait en outre 0,33% en poids de conservateurs / additifs (les mêmes que dans l'exemple 2.2), ainsi que 0,02% d'additif antimousse (le même que dans l'exemple 2.2, Foamaster NXZ) et 1,00% d'agent dispersant de charge (le même que dans l'exemple 2.2, Ecodis P90).

La composition de colle A₅₀ était une dispersion aqueuse contenant 50,00 % poids de charge A, 40,59 % poids d'eau, 5,39 % poids d'amidon de blé natif (le même que dans l'exemple 2.1, amidon de blé Chamtor) et 0,82 % poids de carboxyméthyl éther d'amidon de pomme de terre réticulé (le même que dans l'exemple 2.1, Emcol UK-N), ainsi que 1,91 % poids de polyacétate de vinyle (le même que dans l'exemple 2.1) en dispersion aqueuse soit 1,0505% poids à sec. Cette composition A₅₀ comprenait en outre 0,28% en poids de conservateurs / additifs, ainsi que 0,01% d'additif antimousse (le même que dans l'exemple 2.2, Foamaster NXZ) et 1,00% d'agent dispersant de charge (le même que dans l'exemple 2.2, Ecodis P90).

Les tests, pour ces compositions A₂₀, A₃₀, A₄₀ et A₅₀, ont donné les résultats suivants, résumés dans le Tableau 7, en termes de viscosité, de seuil d'écoulement, de facilité d'application, d'adhésion sur le support, de démontabilité, de détérioration du support et de ponçage.

**Tableau 7**

| Composition de colle | A₂₀ | A₃₀ | A₄₀ | A₅₀ |
|---|---|---|---|---|
| Viscosité (Pa)* | 17 | ND | ND | 76 |
| Seuil d'écoulement (Pa) à 23°C | 500 | ND | ND | ND |
| Facilité d'application | OK | OK | OK | OK |
| Adhésion sur support | OK | OK | OK | OK |
| Démontabilité | Facile | Facile | Facile | Facile |
| Détérioration du support | Non | Non | Non | Non |
| Ponçage | Oui | Oui | Oui | Oui |

| | | | | |
|---|---|---|---|---|
| Où ND : non déterminé et * : Brookfield RVT, Mobile 7, 20 tr/min, à 23°C. | | | | |

Par conséquent, ces compositions A₂₀ A₃₀, A₄₀ et A₅₀ étaient acceptables selon l'invention.

La composition de colle A₆₀ était une dispersion aqueuse contenant 60,00 % poids de charge A, 32,28 % poids d'eau, 4,52 % poids d'amidon de blé natif (le même que dans l'exemple 2.1, amidon de blé Chamtor) et 0,48 % poids de carboxyméthyl éther d'amidon de pomme de terre réticulé (le même que dans l'exemple 2.1, Emcol UK-N), ainsi que 2,18 % poids de polyacétate de vinyle (le même que dans l'exemple 2.1). Cette composition A₆₀ comprenait en outre 0,33% en poids de conservateurs / additifs (les mêmes que dans l'exemple 2.2), ainsi que 0,01% d'additif antimousse (le même que dans l'exemple 2.2, Foamaster NXZ) et 0,20% d'agent dispersant de charge (le même que dans l'exemple 2.2, Ecodis P90).

La composition A₆₀ était beaucoup trop visqueuse, et n'a pas pu être appliquée.

Par suite, cette composition A₆₀ n'était pas acceptable selon l'invention.

La composition de colle A_{AM} testée dans le présent exemple était semblable à la composition Aₙ de l'exemple 2.2, à l'exception que les quantités d'eau, de charge, de conservateurs/ additifs et de polyacétate de vinyle étaient différentes : respectivement de 49,57%, 34,14%, 0,12% et 3,32% (soit 1,826% à sec) dans le cas présent, et que la composition A_{AM} ne comportait que de l'amidon Emcol UK-N (le même que dans l'exemple 2.1) en quantité de 7,63% (au lieu de 7,37 % d'amidon de blé Chamtor et de 1,12% d'Emcol UK-N dans le cas Aₙ).

La composition A_{AM} présentait une viscosité de 154 Pa.s (par Brookfield RVT, Mobile 7, vitesse 20 tr/min, à 23°C). Sa démontabilité était « difficile ».

Par suite, cette composition A_{AM} n'était pas acceptable selon l'invention.

### 2.5 Etude de l'influence de la nature de l'amidon

La composition de colle A_{A} testée dans le présent exemple était semblable à la composition Aₙ de l'exemple 2.2, à l'exception du fait que les quantités d'eau, de conservateurs / additifs et de polyacétate de vinyle étaient différentes : respectivement de 57,16%, 0,12% et 2,00% (soit 1,1% à sec) dans le cas présent, et que la composition A_{A} comportait un amidon différent: un mélange de 1,60% de Solvitose H20 (produit commercial de la société Avebe), qui est un hydroxypropyl éther d'amidon de pomme de terre prégélatinisé, et de 5,40% de Solvitose C5 (produit commercial de la société Avebe), qui est un carboxyméthyl éther d'amidon de maïs réticulé prégélatinisé (au lieu de 7,37 % d'amidon de blé Chamtor natif et de 1,12% d'Emcol UK-N dans le cas Aₙ).

La composition A_{A} présentait une viscosité, de 64 Pa.s (par Brookfield RVT, Mobile 7, vitesse 20 tr/min, à 23°C).

La composition de colle A_{EAA} testée dans le présent exemple était semblable à la composition Aₙ de l'exemple 2.2, à l'exception que le polymère était une dispersion aqueuse d'un copolymère acrylique (produit commercial Acronal A323 de la société BASF, à 55% d'extrait sec), et non du polyacétate de vinyle.

La composition de colle A_{SBR} testée dans le présent exemple était semblable à la composition Aₙ de l'exemple 2.2, à l'exception que le polymère était du SBR (produit commercial Synthomer 45B45 de la société Synthomer, à 50% d'extrait sec), et non du polyacétate de vinyle. Le SBR est un copolymère Styrène-Butadiène (SBR pour « Styrene-Butadiene Rubber » en anglais).

Les tests, pour les compositions différentes Aₙ, A_{A}, A_{EAA} et A_{SBR}, ont donné les résultats suivants, résumés dans le Tableau 8, en termes de facilité d'application, d'adhésion sur le support, de démontabilité, de détérioration du support et de ponçage.

**Tableau 8**

| Composition de colle | Aₙ (selon l'invention) | A_{A} (selon l'invention) | A_{EAA} (selon l'invention) | A_{SBR} (selon l'invention) |
|---|---|---|---|---|
| Facilité d'application | OK | OK | OK | OK |
| Adhésion sur support | OK | OK | OK | OK |
| Démontabilité | Facile | Facile | Facile | Facile |
| Détérioration du support | Non | Non | Non | Non |
| Ponçage | Oui | Oui | Oui | Oui |

Par conséquent, les compositions A_{A}, A_{EAA} et A_{SBR} selon l'invention étaient tout aussi acceptables que la composition Aₙ, donnant d'excellents résultats tant pour la démontabilité, toujours aisée, que pour l'absence de détérioration du support à l'arrachage.

### 2.6 Etude de l'influence de la nature de l'amidon

La composition de colle A' testée dans le présent exemple était très proche de la composition Aₙ de l'exemple 2.2, avec quelques variantes notamment sur la quantité d'amidon (plus faible) et sur la quantité de polyacétate de vinyle (plus importante).

La composition de colle A' était une dispersion aqueuse contenant 34,14 % poids de charge A, 48,99 % poids d'eau, 6,90 % poids d'amidon de blé natif (le même que dans l'exemple 2.1, amidon de blé Chamtor) et 0,73 % poids de carboxyméthyl éther d'amidon de pomme de terre réticulé (le même que dans l'exemple 2.1, Emcol UK-N), ainsi que 3,32 % poids de polyacétate de vinyle (le même que dans l'exemple 2.1). Cette composition A' comprenait en outre 5% de glycérine, 0,69% en poids de conservateurs / additifs (les mêmes que dans l'exemple 2.2), ainsi que 0,03% d'additif antimousse (le même que dans l'exemple 2.2, Foamaster NXZ) et 0,20% d'agent dispersant de charge (le même que dans l'exemple 2.2, Ecodis P90).

La composition A' présentait une viscosité, de 36 Pa.s (par Brookfield RVT, Mobile 7, vitesse 20 tr/min, à 23°C), et un seuil d'écoulement de 550 Pa à 23°C.

Le test, pour cette composition A', a donné les résultats suivants, résumés dans le Tableau 9, en termes de viscosité, de seuil d'écoulement, de facilité d'application, d'adhésion sur le support, de démontabilité, de détérioration du support et de ponçage éventuel.

**Tableau 9**

| Composition de colle | A' |
|---|---|
| Viscosité (Brookfield RVT, Mobile 7, 20 tr/min) (Pa.s) à 23°C | 36 |
| Seuil d'écoulement (Pa) à 23°C | 550 |
| Facilité d'application | OK |
| Adhésion sur support | OK |
| Démontabilité | Facile |
| Détérioration du support | Non |
| Ponçage | Oui |

| | |
|---|---|
| Par conséquent, cette composition A' était acceptable selon l'invention. | |

Le tableau 10 ci-après résume les différentes compositions de colle exemplifiées, ainsi que leur conformité ou non à l'invention.

**Tableau 10**

| Composition de colle (Exemple n°) (% pds) | A_{sc} (2,1) | Aₙ (2,2) | Dₙ (2,2) | Eₙ (2,2) | Fₙ (2,2) | Gₙ (2,2) | Bₙ (2,3) | Cₙ (2,3) | A₁₀ (2,4) | A₂₀ (2,4) | A₃₀ (2,4) | A₄₀ (2,4) | A₅₀ (2,4) | A₆₀ (2,4) | A_{AM} (2,4) | A_{A} (2,5) | A_{EAA} (2,5) | A_{SBR} (2,5) | A' (2,6) |
|---|---|---|---|---|---|---|---|---|---|---|---|---|---|---|---|---|---|---|---|
| **Charge** | - | 28,5 A | 28,5 D | 28,5 E | 28,5 F | 28,5 G | 28,5 B | 28,5 C | 10 A | 20 A | 30 A | 40 A | 50 A | 60 A | 34,14 A | 28,50 A | 28,50 A | 28,50 A | 34,14 A |
| **Amidon** | | | | | | | | | | | | | | | | | | | |
| Natif Chamtor | 11,12 | 7,37 | 7,37 | 7,37 | 7,37 | 7,37 | 7,37 | 7,37 | 9,90 | 9,05 | 7,67 | 6,56 | 5,39 | 4,52 | - | - | 7,37 | 7,37 | 6,90 |
| Réticulé Emcol UK-N | 1,69 | 1,12 | 1,12 | 1,12 | 1,12 | 1,12 | 1,12 | 1,12 | 1,51 | 0,96 | 1,17 | 1,00 | 0,82 | 0,48 | 7,63 | - | 1,12 | 1,12 | 0,73 |
| Réticulé Solvitose H₂₀ | - | - | - | - | - | - | - | - | - | - | - | - | - | - | - | 1,60 | - | - | - |
| Réticulé Solvitose C₅ | - | - | - | - | - | - | - | - | - | - | - | - | - | - | - | 5,40 | - | - | - |
| **Polymère dispersion (sec) :** | | | | | | | | | | | | | | | | | | | |
| Acétate vinyle | 2,90 (1,595) | 1,92 (1,056) | 1,92 (1,056) | 1,92 (1,056) | 1,92 (1,056) | 1,92 (1,056) | 1,92 (1,056) | 1,92 (1,056) | 2,58 (1,419) | 4,35 (2,3925) | 2,00 (1,1) | 1,71 (0,9405) | 1,91 (1,0505) | 2,18 (1,199) | 3,32 (1,826) | 2,00 (1,1) | - | - | 3,32 (1,826) |
| Copolymère acrylique | - | - | - | - | - | - | - | - | - | - | - | - | - | - | - | - | 1,92 (1,056) | - | - |
| SBR | - | - | - | - | - | - | - | - | - | - | - | - | - | - | - | - | - | 1,92 (0,96) | - |
| Eau | 83,69 | 55,48 | 55,48 | 55,48 | 55,48 | 55,48 | 55,48 | 55,48 | 74,48 | 64,75 | 57,74 | 49,38 | 40,59 | 32,28 | 49,57 | 57,16 | 55.48 | 55,48 | 48,99 |
| Conservateurs/ additifs | 0,58 | 0,39 | 0,39 | 0,39 | 0,39 | 0,39 | 0,39 | 0,39 | 0,50 | 0,66 | 0,40 | 0,33 | 0,28 | 0,33 | 0,12 | 0,12 | 0,39 | 0,39 | 0,69 |
| Dispersant de charge Ecodis P90 | - | 0,20 | 0,20 | 0,20 | 0,20 | 0,20 | 0,20 | 0,20 | 1,00 | 0,20 | 1,00 | 1,00 | 1,00 | 0,20 | 0.20 | 0,20 | 0,20 | 0,20 | 0,20 |
| Glycérine | - | 5 | 5 | 5 | 5 | 5 | 5 | 5 | - | - | - | - | - | - | 5 | 5 | 5 | 5 | 5 |
| Antimousse Foamaster NXZ | 0,03 | 0,02 | 0,02 | 0,02 | 0,02 | 0,02 | 0,02 | 0,02 | 0,03 | 0,03 | 0,02 | 0,02 | 0,01 | 0,01 | 0,02 | 0,02 | 0,02 | 0,02 | 0,03 |
| Total composants composition de colle | 100 | 100 | 100 | 100 | 100 | 100 | 100 | 100 | 100 | 100 | 100 | 100 | 100 | 100 | 100 | 100 | 100 | 100 | 100 |
| Résultat conforme selon l'invention (oui / non) | NON | OUI | NON | NON | OUI | OUI | OUI | OUI | NON | OUI | OUI | OUI | OUI | NON | NON | OUI | OUI | OUI | OUI |

## Revendications

1. Composition de colle pour toile de verre, de viscosité comprise dans une fourchette de 15 à 120 Pa.s à 23°C et de seuil d'écoulement d'au moins 400 Pa à 23°C, ladite composition étant une dispersion aqueuse contenant :
- Au moins une charge minérale formée de particules de granulométrie comprise dans une fourchette de 0,1 à 130 µm, d'indice de polydispersité compris dans une fourchette de 1,1 à 20, et de taille médiane D₅₀ comprise dans une fourchette de 0,5 à 40 µm, la charge minérale présentant un produit de solubilité dans l'eau, Kₛ, inférieur ou égal à 10⁻⁶ à 25°C, la charge minérale étant présente dans la composition en quantité comprise dans une fourchette de 12 à 55%, en poids par rapport au poids total de la composition ;
- Au moins un amidon, l'amidon étant présent dans la composition en quantité comprise dans une fourchette de 5 à 15%, en poids par rapport au poids total de la composition ; et
- Au moins un polymère en quantité, exprimée en sec, comprise dans une fourchette de 0,5 à 6%, en poids par rapport au poids total de la composition.

2. Composition selon la revendication 1, **caractérisée en ce que** la charge minérale est comprise dans le groupe formé par les carbonates de calcium, les dioxydes de titane et les poudres de verre.

3. Composition selon l'une quelconque des revendications 1 et 2, **caractérisée en ce que** le polymère est un polyacrylate ou un polyacétate de vinyle, et de préférence le polymère est un polyacétate de vinyle.

4. Composition selon l'une quelconque des revendications 1 à 3, **caractérisée en ce qu'**elle comporte en outre au moins un additif choisi dans le groupe formé par les plastifiants, les conservateurs, les agents anti-mousse, les agents mouillants et les agents dispersants de charge.

5. Composition selon l'une quelconque des revendications 1 à 4, **caractérisée en ce que** l'amidon comprend un amidon de blé natif et un amidon réticulé de maïs ou de pomme de terre, de préférence du carboxyméthyl ether d'amidon réticulé de pomme de terre ou de maïs, l'amidon réticulé étant présent dans une quantité de 0 à 20%, de préférence de 5 à 18%, de façon encore plus préférée de 9 à 15% en poids, par rapport au poids total d'amidon présent dans la composition de colle.

6. Composition selon l'une quelconque des revendications 1 à 5, **caractérisée en ce que** la quantité de charge minérale dans ladite composition est comprise dans une fourchette de 15 à 50%, de façon préférée de 20 à 50%, en poids par rapport au poids total de la composition.

7. Composition selon l'une quelconque des revendications 1 à 6, **caractérisée en ce que** la quantité d'amidon dans ladite composition est comprise dans une fourchette de 5 à 12%, de façon préférée de 5 à 10%, en poids par rapport au poids total de la composition.

8. Composition selon l'une quelconque des revendications 1 à 7, **caractérisée en ce que** la quantité, exprimée à sec, de polymère dans ladite composition est comprise dans une fourchette de 0,5 à 4%, de façon encore plus préférée de 1 à 3%, en poids par rapport au poids total de la composition.

9. Procédé de pose d'une toile de verre par application d'au moins une couche d'une composition de colle selon l'une quelconque des revendications 1 à 8, dans une quantité de 150 à 250 g/m², sur un support puis application de la toile de verre sur le support ainsi enduit.

10. Toile de verre enduite sur un support obtenue selon le procédé de la revendication 9.

11. Procédé de dépose d'une toile de verre enduite sur un support selon la revendication 10, ledit procédé comprenant un arrachage manuel, à sec, de ladite toile de verre.

## Patentansprüche

1. Klebstoffzusammensetzung für Glasgewebe mit einer Viskosität in einem Bereich von 15 bis 120 Pa.s bei 23°C und einer Fließgrenze von mindestens 400 Pa bei 23°C, wobei es sich bei der Zusammensetzung um eine wässrige Dispersion handelt, die Folgendes enthält:
- mindestens einen anorganischen Füllstoff, gebildet aus Teilchen mit einer Korngröße in einem Bereich von 0,1 bis 130 µm, einem Polydispersitätsindex in einem Bereich von 1,1 bis 20 und einer mittleren Größe D₅₀ in einem Bereich von 0,5 bis 40 µm, wobei der anorganische Füllstoff ein Löslichkeitsprodukt in Wasser, Kₛ, kleiner gleich 10⁻⁶ bei 25°C aufweist, wobei der anorganische Füllstoff in der Zusammensetzung in einer Menge in einem Bereich von 12 bis 55 Gew.-%, bezogen auf das Gesamtgewicht der Zusammensetzung, vorliegt;
- mindestens eine Stärke, wobei die Stärke in der Zusammensetzung in einer Menge in einem Bereich von 5 bis 15 Gew.-%, bezogen auf das Gesamtgewicht der Zusammensetzung, vorliegt; und
- mindestens ein Polymer in einer auf Trockenbasis ausgedrückten Menge in einem Bereich von 0,5 bis 6 Gew.-%, bezogen auf das Gesamtgewicht der Zusammensetzung.

2. Zusammensetzung nach Anspruch 1, **dadurch gekennzeichnet, dass** der anorganische Füllstoff aus der Gruppe bestehend aus Calciumcarbonaten, Titandioxiden und Glaspulver stammt.

3. Zusammensetzung nach einem der Ansprüche 1 und 2, **dadurch gekennzeichnet, dass** es sich bei dem Polymer um ein Polyacrylat oder ein Polyvinylacetat und vorzugsweise um ein Polyvinylacetat handelt.

4. Zusammensetzung nach einem der Ansprüche 1 bis 3, **dadurch gekennzeichnet, dass** sie außerdem mindestens ein Additiv aus der Gruppe bestehend aus Weichmachern, Konservierungsmitteln, Antischaummitteln, Netzmitteln und Füllstoff-Dispergiermitteln enthält.

5. Zusammensetzung nach einem der Ansprüche 1 bis 4, **dadurch gekennzeichnet, dass** die Stärke eine native Weizenstärke und eine vernetzte Mais- oder Kartoffelstärke, vorzugsweise Carboxymethylether vernetzter Mais- oder Kartoffelstärke, umfasst, wobei die vernetzte Stärke in einer Menge von 0 bis 20 Gew.-%, vorzugsweise 5 bis 18 Gew.-%, noch weiter bevorzugt 9 bis 15 Gew.-%, bezogen auf das Gesamtgewicht der in der Klebstoffzusammensetzung vorliegenden Stärke, vorliegt.

6. Zusammensetzung nach einem der Ansprüche 1 bis 5, **dadurch gekennzeichnet, dass** die Menge von anorganischem Füllstoff in der Zusammensetzung in einem Bereich von 15 bis 50 Gew.-%, vorzugsweise 20 bis 50 Gew.-%, bezogen auf das Gesamtgewicht der Zusammensetzung, liegt.

7. Zusammensetzung nach einem der Ansprüche 1 bis 6, **dadurch gekennzeichnet, dass** die Stärkemenge in der Zusammensetzung in einem Bereich von 5 bis 12 Gew.-%, vorzugsweise 5 bis 10 Gew.-%, bezogen auf das Gesamtgewicht der Zusammensetzung, liegt.

8. Zusammensetzung nach einem der Ansprüche 1 bis 7, **dadurch gekennzeichnet, dass** die auf Trockenbasis ausgedrückte Polymermenge in der Zusammensetzung in einem Bereich von 0,5 bis 4 Gew.-%, noch weiter bevorzugt 1 bis 3 Gew.-%, bezogen auf das Gesamtgewicht der Zusammensetzung, liegt.

9. Verfahren zum Anbringen eines Glasgewebes durch Aufbringen mindestens einer Schicht einer Klebstoffzusammensetzung nach einem der Ansprüche 1 bis 8 in einer Menge von 150 bis 250 g/m² auf einen Träger und anschließendes Aufbringen des Glasgewebes auf den so beschichteten Träger.

10. Auf einen Träger aufgetragenes Glasgewebe, erhalten nach dem Verfahren von Anspruch 9.

11. Verfahren zum Entfernen eines auf einen Träger aufgetragenen Glasgewebes nach Anspruch 10, bei dem man das Glasgewebe in trockenem Zustand per Hand abreißt.

## Claims

1. Adhesive composition for glass cloth, with a viscosity within a range from 15 to 120 Pa.s at 23°C and with a yield point of at least 400 Pa at 23°C, the said composition being an aqueous dispersion comprising:
- at least one inorganic filler formed of particles with a particle size within a range from 0.1 to 130 µm, with a polydispersity index within a range from 1.1 to 20, and with a median size D₅₀ within a range from 0.5 to 40 µm, the organic filler exhibiting a solubility product in water, Kₛ, of less than or equal to 10⁻⁶ at 25°C, the inorganic filler being present in the composition in an amount within a range from 12% to 55% by weight, with respect to the total weight of the composition;
- at least one starch, the starch being present in the composition in an amount within a range from 5% to 15% by weight, with respect to the total weight of the composition; and
- at least one polymer in an amount, expressed on a dry basis, within a range from 0.5% to 6% by weight, with respect to the total weight of the composition.

2. Composition according to Claim 1, **characterized in that** the inorganic filler is in the group formed by calcium carbonates, titanium dioxides and glass powders.

3. Composition according to either one of Claims 1 and 2, **characterized in that** the polymer is a polyvinyl acrylate or a polyvinyl acetate and preferably the polymer is a polyvinyl acetate.

4. Composition according to any one of Claims 1 to 3, **characterized in that** it additionally comprises at least one additive chosen from the group formed by plasticizers, preservatives, antifoaming agents, wetting agents and filler-dispersing agents.

5. Composition according to any one of Claims 1 to 4, **characterized in that** the starch comprises a native wheat starch and a crosslinked maize or potato starch, preferably crosslinked potato or maize starch carboxymethyl ether, the crosslinked starch being present in an amount of 0% to 20% by weight, preferably of 5% to 18% by weight and more preferably still of 9% to 15% by weight, with respect to the total weight of starch present in the adhesive composition.

6. Composition according to any one of Claims 1 to 5, **characterized in that** the amount of inorganic filler in the said composition is within a range from 15% to 50% by weight, preferably from 20% to 50% by weight, with respect to the total weight of the composition.

7. Composition according to any one of Claims 1 to 6, **characterized in that** the amount of starch in the said composition is within a range from 5% to 12% by weight, preferably from 5% to 10% by weight, with respect to the total weight of the composition.

8. Composition according to any one of Claims 1 to 7, **characterized in that** the amount, expressed on a dry basis, of polymer in the said composition is within a range from 0.5% to 4% by weight, more preferably still from 1% to 3% by weight, with respect to the total weight of the composition.

9. Process for laying down a glass cloth by application of at least one layer of an adhesive composition according to any one of Claims 1 to 8, in an amount of 150 to 250 g/m², on a support, followed by application of the glass cloth to the support thus coated.

10. Glass cloth coated on a support, obtained according to the process of Claim 9.

11. Process for the removal of a glass cloth coated on a support according to Claim 10, the said process comprising the manual tearing off, under dry conditions, of the said glass cloth.
